Europäisches Patentamt

(19) European Patent Office

Office européen des brevets

(11) Veröffentlichungsnummer: **0 064 630**
**B1**

(12) **EUROPÄISCHE PATENTSCHRIFT**

(45) Veröffentlichungstag der Patentschrift:
13.02.85

(51) Int. Cl.⁴: **C 08 L 23/08, C 08 L 95/00**

(21) Anmeldenummer: 82103363.6

(22) Anmeldetag: 21.04.82

(54) Flammhemmende thermoplastische Formmassen auf Basis von Polyolefin-Bitumen-Mischungen und deren Verwendung zur Herstellung von Formkörpern, insbesondere von Abdichtungsbahnen für den Hoch- und Tiefbau.

(30) Priorität: 05.05.81 DE 3117672

(43) Veröffentlichungstag der Anmeldung:
17.11.82 Patentblatt 82/46

(45) Bekanntmachung des Hinweises auf die Patenterteilung:
13.02.85 Patentblatt 85/7

(84) Benannte Vertragsstaaten:
BE DE FR GB NL SE

(56) Entgegenhaltungen:
FR - A - 1 475 531
FR - A - 2 141 918
US - A - 4 000 140

JOURNAL OF APPLIED POLYMER SCIENCE, Band 24, 1979, Seiten 1457-1464, John Wiley & Sons, Inc. E.N. PETERS: "Flame-retardant thermoplastics. I. Polythylene-red phosphorus"

(73) Patentinhaber: BASF Aktiengesellschaft,
Carl-Bosch-Strasse 38, D-6700 Ludwigshafen (DE)

(72) Erfinder: Koehnlein, Ernst, Dr. Chem., Ungsteiner Strasse 4, D-6700 Ludwigshafen (DE)
Erfinder: Moorwessel, Dieter, Dr. Chem., Dilsberger Strasse 3-5, D-6800 Mannheim (DE)

## Beschreibung

Die Erfindung betrifft flammhemmende thermoplastische Formmassen auf der Basis von Mischungen aus Olefinpolymerisaten, Bitumen, Füllstoffen und Brandschutzmitteln.

Derartige Formmassen sind zur Herstellung von Formkörpern, insbesondere von Abdichtungsbahnen für den Hoch- und Tiefbau geeignet.

Stoffmischungen auf der Basis von Ethylencopolymerisaten und Bitumen sind aus der Literatur wohl bekannt (vgl. DE-PS 2 441 203 und DE-PS 1 298 282). Es ist weiterhin bekannt, Formmassen auf Basis Ethylencopolymerisat und Bitumen mit mineralischen Füllstoffen auszurüsten (vgl. DE-PS 1 807 071, DE-OS 1 910 178, DE-OS 1 962 640 oder DE-OS 2 353 439). Solche Ausrüstungen dienen der Streckung des Materials und bewirken im allgemeinen eine Minderung der Festigkeit der daraus hergestellten Artikel. Ein wirksamer Brandschutz wird durch solche Füllungen nicht erzielt. Es ist ferner bekannt, bei thermoplastischen Formmassen auf Basis Ethylencopolymerisaten einen Brandschutz zu erhalten, indem man Aluminiumhydroxid beimischt (vgl. US-PS 3 832 326).

Weiter ist es bekannt, bei Polyolefinen einen Brandschutz durch Zusatz von rotem Phosphor zu erzielen (vgl. »Journal of Applied Polymer Science«, Vol. 24, (1979), Seiten 1457 bis 1464).

Die bekannten Formmassen weisen ein unzureichendes Brandverhalten und eine niedrige Wärmeformbeständigkeit auf.

Der Erfindung lag die Aufgabe zugrunde, eine flammhemmende, halogenfreie, thermoplastische Formmasse zur Herstellung von Formkörpern, insbesondere von Abdichtungsbahnen zu entwickeln, deren mechanische Eigenschaften, insbesondere bei höheren Temperaturen, und deren brandschutztechnischen Eigenschaften gegenüber den bekannten Formmassen auf Basis Ethylencopolymerisat-Bitumen-Mischungen verbessert sind.

Diese Aufgabe wird erfindungsgemäß gelöst durch Formmassen, die bestehen aus: (A) 20 bis 50 Gew.-Teilen eines Ethylencopolymerisats, das 7 bis 25 Gew.-% Vinylacetat, Butylacrylat, Propylen oder 1-Buten einpolymerisiert enthält, (B) 20 bis 50 Gew.-Teilen Bitumen, das entsprechend DIN 1995 eine Penetration bei 25° C von 3 bis 100 aufweist, (C) 5 bis 30 Gew.-Teilen Aluminiumhydroxid, dessen Teilchengrößen zu 95 Gew.-% zwischen 5 und 150 µm liegen und (D) 1 bis 10 Gew.-Teilen roter Phosphor, sowie 0 bis 25 Gew.-Teilen Polyethylen der Dichte 0,917 bis 0,940 g/cm$^3$ und des Schmelzindex von 0,1 bis 10 g/10 min, 0,2 bis 5 Gew.-Teilen Ruß und 0 bis 5 Gew.-Teilen Glycerinmonostearat.

Bevorzugt ist die Bitumenkomponente (B) ein Extraktions- und/oder Fällungsbitumen, das entsprechend DIN 1995 eine Penetration bei 25° C von 3 bis 10 aufweist.

Besonders geeignet sind Formmassen der oben angegebenen Art, die 15 bis 25 Gew.-Teile Aluminiumhydroxid (C) und 3 bis 7 Gew.-Teile roten Phosphor (D) enthalten.

Unter Ethylencopolymerisaten werden statistische binäre Copolymerisate des Ethylens verstanden, die 75 bis 93, bevorzugt 80 bis 90 Gew.-% Ethylen und 7 bis 25, bevorzugt 10 bis 20 Gew.-%, bezogen auf das Copolymerisat, an Comonomeren Vinylacetat, n-, iso- oder tert.-Butylacrylat, Propylen oder 1-Buten einpolymerisiert enthalten. Besonders geeignet sind die Copolymerisate des Ethylens mit n-, iso- oder tert.-Butylacrylat sowie mit Vinylacetat. Diese Copolymerisate weisen einen Schmelzindex zwischen 0,2 und 25, bevorzugt 1,0 und 10 g/10 min, gemessen nach ASTM D 138-65 T bei einer Temperatur von 190° C und einem Auflagegewicht von 2,16 kg und eine Dichte zwischen 0,918 und 0,965 g/cm$^3$, gemessen nach DIN 53 479, auf. Die Ethylencopolymerisate mit Propylen bzw. mit 1-Buten haben Schmelzindexwerte von 0,2 bis 25 g/10 min, bestimmt nach obiger Methode.

Bitumen sind die in der DIN 55 946 definierten, bei schonender Aufarbeitung von Erdölen gewonnenen dunkelfarbigen, halbfesten bis springharten, schmelzbaren hochmolekularen Kohlenwasserstoffgemische. Die erfindungsgemäß angewendeten Bitumen haben nach DIN 1995 eine Penetration bei 25° C von 3 bis 100 und einen Erweichungspunkt (Ring und Kugel) von 140 bis 40° C. Es können auch alle anderen handelsüblichen natürlichen und synthetischen Bitumensorten verwendet werden.

Unter Aluminiumhydroxid — Al(OH)$_3$ — werden die wohlbekannten und im Handel erhältlichen Produkte verstanden, so daß sich nähere Ausführungen erübrigen. Die erfindungsgemäß zu verwendenden Produkte sollten zu 95 Gew.-% Teilchengrößen zwischen 5 und 150, bevorzugt 10 und 100 µm, aufweisen.

Der rote Phosphor ist an sich als Flammschutzmittel für Thermoplaste bekannt. Er soll pulverförmig angewendet werden.

Das gegebenenfalls zu verwendende Polyethylen, das bevorzugt in Mengen von 15 bis 25 Gew.-%, bezogen auf die Gesamtmischung, vorhanden ist, weist eine Dichte von 0,917 bis 0,940 g/cm$^3$, bestimmt nach DIN 53 479 und einen Schmelzindex von 0,1 bis 10 g/10 min, gemessen nach ASTM D 1238-65 T bei einer Temperatur von 190° C und einem Auflagegewicht von 2,16 kg auf. Durch die Zugabe von Polyethylen kann die Wärmeformbeständigkeit der Mischung erhöht werden.

Die gegebenenfalls zu verwendenden Mischungskomponenten Ruß und Glycerinmonostearat sind so bekannt, daß sich nähere Erläuterungen erübrigen. Das Glycerinmonostearat dient zur Verbesserung der Verarbeitungseigenschaften.

Nach bevorzugter Verfahrensweise soll die Bitumenkomponente (B) ein Extraktions- und/oder Fällungsbitumen sein, das entsprechend DIN 1995 eine Penetration bei 25° C von 3 bis 10 und einen Erweichungspunkt nach DIN 1995 (Ring und Kugel) zwischen 40 und 110° C aufweist. Unter Extrakt-und/oder Fällungsbitumen werden ölarme Bitumensorten verstanden, die entsprechend stark spröde und hart sind und nur eine geringe Penetration aufweisen. Eine genauere Definition obiger Bitumensorten ist in der DE-PS 2 441 203 oder der US-PS 3 980 598 enthalten. Besonders geeignet ist ein Propan-Extraktbitumen mit einer Penetration von 8 bei 25° C und einem Erweichungspunkt von 72° C.

Die erfindungsgemäße Mischung kann durch Mischen der einzelnen Komponenten, z. B. in einem Kneter bei Temperaturen von 130 bis 160° C, nach üblichen Mischverfahren erhalten werden.

Die mit der Erfindung erzielten Vorteile sind insbesondere darin zu sehen, daß durch die Kombination der Füllung der Formmassen mit Aluminiumhydroxid und rotem Phosphor ein wesentlich verbesserter Brandschutz erzielt werden kann als mit den Einzelkomponenten, ohne daß die Brandgase im Brandfall ätzende Halogenwasserstoffe enthalten können. Man erhält bereits bei Füllgraden von 20 Gew.-% Aluminiumhydroxid und 4 Gew.-% Phosphor einen Brandschutz, der ohne die Beimengung von rotem Phosphor auch mit wesentlich höheren Füllgraden an Aluminiumhydroxid nicht erzielt wird. Durch geringe Füllgrade an Aluminiumhydroxid wird die mechanische Festigkeit und Verformbarkeit gegenüber ungefülltem Material weniger reduziert als bei hohen Füllgraden.

Die erhaltenen Formmassen dienen zur Herstellung von Formkörpern, insbesondere zur Herstellung von Abdichtungsbahnen für den Hoch- und Tiefbau. Die Bahnen können in einem weiten Temperaturbereich hohe Schub- und Zugkräfte sowie starke Deformationen aufnehmen.

Als Beispiele werden die in der Tabelle wiedergegebenen Mischungsrezepte verwendet. In einem Laborkneter werden die Mischungskomponenten bei 160° C miteinander homogen vermischt. Aus den Mischungen werden Preßplatten hergestellt, an welchen die mechanischen Prüfungen und die Untersuchungen des Brandverhaltens durchgeführt werden.

Die Prüfung des Brandverhaltens wird an 3 mm dicken Proben ausgeführt. Dabei wird der Oxigen-Index nach ASTM D 2863-77 und der Test nach Underwriter UL 94-V2 (Vertical-Burning-Test) ausgeführt. Bei den Materialien, die die Bedingungen für UL 94-V2 erfüllen, sind die Nachbrennzeiten in Sekunden nach erster und zweiter Beflammung in der Tabelle angeführt. Als Maß für die Wärmeformbeständigkeit dient der Torsionsmodul G [Newton/mm²] nach DIN 53 455, als Maß für die Festigkeit dient die Reißfestigkeit $\delta_R$ [Newton/mm²] nach DIN 53 455, und als Maß für die Deformierbarkeit dient die Reißdehnung $\varepsilon_R$ [in Prozent] nach DIN 53 455. Als Ethylencopolymerisat (Mischungskomponente A) wurde ein binäres Ethylen-n-Butylacrylat-Copolymerisat mit 20 Gew.-% einpolymerisiertem Butylacrylat und einem Schmelzindex von 1,5 g/10 min verwendet, als Bitumen (Mischungskomponente B) ein Propan-Extraktbitumen mit einer Penetration von 8 bei 25° C, als Al(OH)$_3$ ein Pulver mit einer Teilchengröße zu 95 Gew.-% zwischen 10 und 90 µm, als Phosphor (P) roter Phosphor in Pulverform und als Polyethylen (PE) ein Polymerisat der Dichte 0,918 g/cm³ und des Schmelzindex 1,5 g/10 min. Unter L.O.I. wird der Limiting-Oxygen-Test nach ASTM D 2863-77 verstanden.

Tabelle

| Beispiel | A Gew.-% | B Gew.-% | Al(OH)$_3$ Gew.-% | P Gew.-% | PE Gew.-% | Ruß Gew.-% |
|---|---|---|---|---|---|---|
| 1 | 20 | 35 | 20 | — | 22,5 | 2,5 |
| 2 | 20 | 30 | 20 | 5 | 22,5 | 2,5 |
| 3 | 20 | 50 | — | — | — | — |

Fortsetzung

| Beispiel | $\delta_R$ (N/mm²) 23° C | 80° C | $\varepsilon_R$ (N/mm²) 23° C | 80° C | G (N/mm²) 80° C | UL 94 V2 Nachbrenndauer (sec) 1. Befl. | 2. Befl. | L.O.I. (% O$_2$) |
|---|---|---|---|---|---|---|---|---|
| 1 | 4,1 | 0,7 | 460 | 70 | 1,0 | 50 | 32 | 23,5 |
| 2 | 4,1 | 0,7 | 500 | 65 | 1,0 | 16 | 13 | 26,6 |
| 3 | 5,5 | 0,3 | 750 | 200 | 0,2 | — | — | 20 |

## Patentansprüche

1. Flammhemmende, thermoplastische Formmassen auf der Basis von Mischungen aus Olefinpolymerisaten, Bitumen, Füllstoffen und Brandschutzmitteln, dadurch gekennzeichnet, daß die Formmassen bestehen aus (A) 20 bis 50 Gew.-Teilen eines Ethylencopolymerisats, das 7 bis 25 Gew.-% Vinylacetat, Butylacrylat, Propylen oder 1-Buten einpolymerisiert enthält, (B) 20 bis 50 Gew.-Teilen Bitumen, das entsprechend DIN 1995 eine Penetration bei 25°C von 3 bis 100 aufweist, (C) 5 bis 30 Gew.-Teilen Aluminiumhydroxid, dessen Teilchengrößen zu 95 Gew.-% zwischen 5 und 150 μm liegen und (D) 1 bis 10 Gew.-Teilen roter Phosphor sowie 0 bis 25 Gew.-Teilen Polyethylen der Dichte 0,917 bis 0,940 g/cm$^3$ und des Schmelzindex von 0,1 bis 10 g/10 min, 0,2 bis 5 Gewichtsteilen Ruß und 0 bis 5 Gewichtsteilen Glycerinmonostearat.

2. Flammhemmende, thermoplastische Formmasse nach Anspruch 1, dadurch gekennzeichnet, daß die Bitumenkomponente (B) ein Extraktions- und/oder Fällungsbitumen ist, das entsprechend DIN 1995 eine Penetration bei 25°C von 3 bis 10 aufweist.

3. Formmassen nach Anspruch 1, die 15 bis 25 Gew.-Teile Aluminiumhydroxid (C) und 3 bis 7 Gew.-Teile roten Phosphor (D) enthalten.

4. Verwendung der Formmassen nach Anspruch 1 zur Herstellung von Formkörpern.

5. Verwendung der Formmasse nach Ansprüchen 1 und 3 zur Herstellung von Abdichtungsbahnen für den Hoch- und Tiefbau.

## Claims

1. A flame-retardant thermoplastic moulding composition based on a mixture of an olefin polymer, bitumen, fillers and a flameproofing agent, wherein the moulding composition consists of (A) 20 to 50 parts by weight of an ethylene copolymer containing from 7 to 25% by weight of copolymerized units of vinyl acetate, butyl acrylate, propylene or butene-1, (B) 20 to 50 parts by weight of bitumen which has a penetration according to DIN 1995 of 3 to 100 at 25°C, (C) 5 to 30 parts by weight of aluminium hydroxide, 95% by weight of whose particles have a size of from 5 to 150 μm, and (D) 1 to 10 parts b y weight of red phosphorus, as well as 0 to 25 parts by weight of polyethylene having a density of from 0.917 to 0.940 g/cm$^3$ and a melt index of from 0.1 to 10 g/10 min, 0.2 to 5 parts by weight of carbon black, and 0 to 5 parts by weight of glycerol monostearate.

2. A flame-retardant thermoplastic moulding composition as claimed in claim 1, wherein component (B) is an extracted and/or precipitated asphalt which has a penetration according to DIN 1995 of 3 to 10 at 25°C.

3. A moulding composition as claimed in claim 1, containing 15 to 25 parts by weight of aluminium hydroxide (C) and 3 to 7 parts by weight of red phosphorus (D).

4. The use of a moulding composition as claimed in claim 1 for the production of mouldings.

5. The use of a moulding composition as claimed in claims 1 and 3 for the production of sealing material in web form for building construction and civil engineering.

## Revendications

1. Matières à mouler thermoplastiques retardant la combustion à base de mélanges de polymères oléfiniques, de bitume, de matières de charge et d'agents ignifugeants, caractérisées en ce qu'elles sont composées de:

(A)  20 à 50 parties en poids d'un copolymérisat de l'éthylène avec 7 à 25% en poids d'acétate de vinyle, d'acrylate de butyle, de propylène ou de butène-1;

(B)  20 à 50 parties en poids d'un bitume d'une pénétration selon la norme DIN 1995 de 3 à 100 à 25°C;

(C)  5 à 30 parties en poids d'hydroxyde d'aluminium, dont 95% en poids des particules possèdent une granulométrie comprise entre 5 et 150 μm;

(D)  1 à 10 parties en poids de phosphore rouge, et contiennent en outre
0 à 25 parties en poids d'un polyéthylène d'une masse volumique de 0,917 à 0,940 g/cm$^3$ et d'un indice de fusion de 0,1 à 10 g/10 mn,
0,2 à 5 parties en poids de suie et
0 à 5 parties en poids de monostéarate de glycérine.

2. Matières à mouler thermoplastiques retardant la combustion suivant la revendication 1, caractérisées en ce que le composant bitumineux (B) est un bitume d'extraction et(ou) de précipitation avec une pénétration selon la norme DIN 1995 de 3 à 10 à 25°C.

3. Matières à mouler suivant la revendication 1, contenant entre 15 et 25 parties en poids d'hydroxyde d'aluminium (C) et entre 3 et 7 parties en poids de phosphore rouge (D).

4. Utilisation de matières à mouler suivant la revendication 1 pour la fabrication d'éléments façonnés.

5. Utilisation de matières à mouler suivant les revendications 1 et 3 pour la production de bandes de calfeutrage pour la construction en surface et(ou) souterraine.